# EUROPEAN PATENT APPLICATION

(11) **EP 4 682 089 A1**
(43) Date of publication of application: **21.01.2026**
(21) Application number: 24189480.7
(22) Date of filing: 18.07.2024
(51) Int. Cl.: B65G 1/137

(54) **STATION FOR HANDLING TRAYS AND THEIR CONTENTS**

(71) Applicant: MARTISTEL INNOVATION FZCO, Dubai 342001 (AE)
(72) Inventor: RAZUMOV, Sergey, 2047 Strovolos (CY); SULTANOV, OLEG, Palm Jumeirah Dubai (AE); ZARETCKII, Andrei, 3403 Dubai (AE)
(74) Representative: Jeck, Jonathan

(57) **Abstract**

A processing system with a processing line for handling trays and their contents by an operator, the processing line comprising a shelf (100) with at least two storage areas (102) for holding trays (001) for an operator's (002) handling the shelf is movable laterally along the processing line such that each of the storage areas (102) is deliverable to an operator working position at the processing line, the processing line is connected to multiple delivery tracks (200) for mobile transport units (300) which are adapted to deliver the trays (001) to one of the storage areas (102) of the shelf (100),wherein the shelf (100) is adapted such that at least one of the storage areas (102) is alignable to one of the connections to a delivery track (200), to allow for a transfer of a tray (001) between the mobile transport unit (300) on a delivery track (200) and the adjacent positioned storage area (102), the delivery tracks (200) reach under the shelf (100) such that the mobile transport units (300) can directly move between neighbouring storage areas (102), and the shelf (100) is adapted to be positioned such that individual storage areas (102) can interact with different mobile transport units (300) from different delivery tracks (200) simultaneously for an exchange of trays (001),

## Description

It is the main object of the present invention to provide a place for handling trays and their contents for operation in a storage and access system, and methods of operation thereof, comprising a mobile shelf (100) for a plurality of storage locations, located above a transport network (200) configured to allow transport mobile units (300) (MTUs) moving trays (001) to operate therein.

### Known prior art.

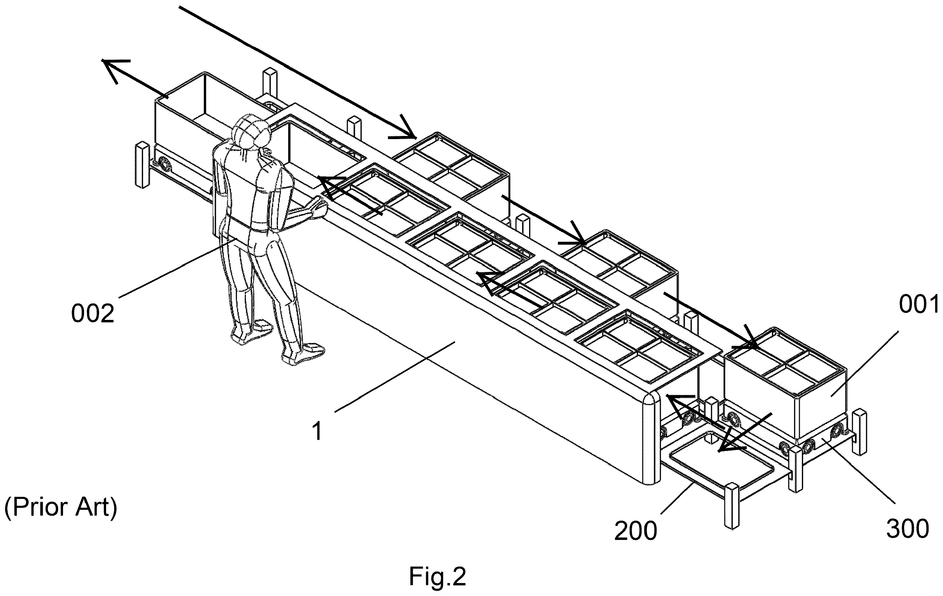

Figure 2 illustrates a known prior art processing location for handling trays and their contents, used in a storage and access system configured to allow transport mobile devices (300) (MTUs) moving trays (001) to operate therein. The processing location allows a stationary operator to process a tray (001) brought to him by the transport mobile device (300). The movement of the transport mobile devices (300) along the transportation network (200) connecting the workstation to the storage system is in one direction only. Thus, the transportation network (200) in the area of the tray handling area is two one direction only lanes facing each other with their long sides. In this case, the transport mobile devices, when moving from one lane to the other, must change their direction of movement twice. In addition, in the traffic lane, which is directly in the working area of the place of processing trays and their contents, MTU (300) with trays to be processed, lined up in a queue, interfering with each other.

The disadvantages of the known place for processing trays and their contents are:
1. a very small operator's working area to which the target trays must be delivered.
2. Organization of the transport network, in which the MTUs (300), interfere with each other, increasing the processing time.
3. The need for the MTU (300) to make unnecessary slow manoeuvres (changes of direction), thereby increasing processing time.
4. The need for the MTU (300) to remain in the area where the trays and their contents are processed at all times until the target tray (001) thereon is processed, thereby increasing the required number of MTUs (300) in the system.

### Essence of the invention

The tray processing place and its contents proposed herein, as well as the method of its operation and the method of feeding target trays (001) directly into its working line, on a mobile shelf (100), by a plurality of MTUs (300), without additional changes of direction of movements, each in its own lane, and the movement of the mobile shelf (100) with the target trays (001) brought thereon earlier, having several tray storage places (shelves), along the working line from its remote positions to the operator's working area, results in the following improvements:
1. Reduces the waiting time for the feeding of objects, as it relieves the MTU (300) from mutual interference and unnecessary rearrangements between lanes, and as a consequence increases the speed of processing and reduces its cost.
2. Reduces the time of transport mobile devices in the zone of tray processing to a minimum, as a consequence it reduces the required number of devices (300).
3. Expands the working range of the workstation operator from the local area where he can reach to the entire working line adjacent to the tray processing area.

### List of Figures.

1. Figure 1 shows the tray handling place and its contents represented in the invention. The view is isometric.
2. Fig.2 shows an existing known place for handling trays and their contents. The view is isometric.
3. Fig.3 shows in more detail a mobile shelf (100) and a working line adjacent to a place for processing trays and their contents according to the invention presented. The view is isometric.
4. Figs. 4-12 shows a step-by-step method of operation of the presented embodiment of a tray processing place and its contents according to the present invention.

### Description.

The main object of the present invention is a place for handling trays and their contents for operation in a storage and access system, and methods of operation thereof, comprising a mobile shelf (100) for a plurality of storage spaces, located above a transport network (200) configured to allow transport mobile units (300) (MTUs) moving trays (001) to operate therein.

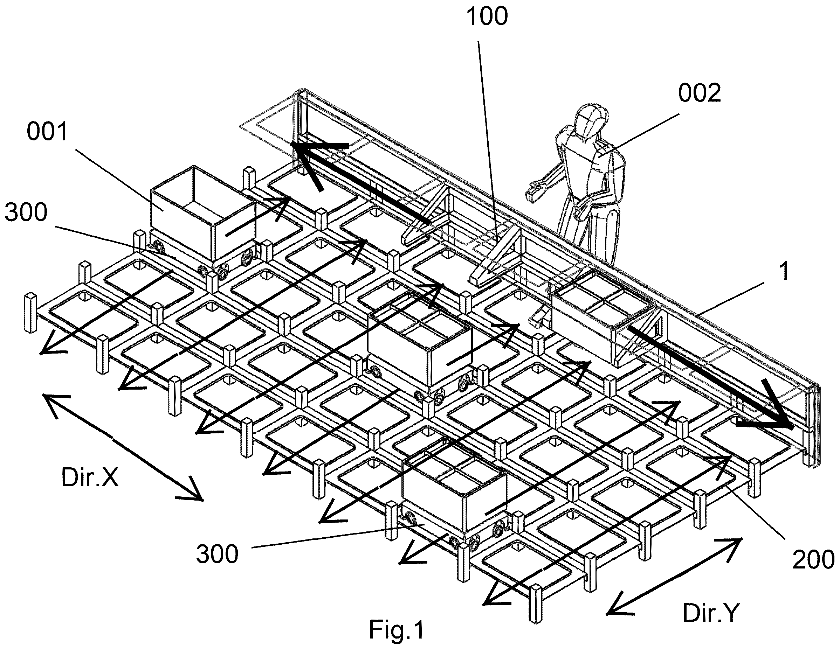

Figure 1 shows the tray and contents handling place represented in the invention, configured to allow operation therein of transport mobile devices (300) serving to pick up, place and transport trays (001), and including a mobile shelf (100) for three tray storage locations (001). As can be seen from the figure, the place for handling the trays and their contents may include an enclosure (1) that shields the operator (002) from the area of operation of the MTU (300) and the mobile shelf (100), and gives the operator access preferably from above to the trays (001) located on the mobile shelf (100) and access to their contents. Beneath the mobile shelf (100), which can be moved in the "X" (longitudinal to the processing line) direction to either side thereof, is a transportation network (200) configured to allow a plurality of MTUs (300) to be moved therethrough, both empty and with trays (001). The height of the mobile shelf(s) (100) above the transportation network (200) is such that the trayless MTUs (300) driving under it in the "Y" (transversal to the processing line) direction can move out from under it without interfering with the movement of the shelf(s) (100), and that the MTUs (300) are adapted to place and remove the trays (001) onto it and/or from it. The figure shows the width of the working area of the tray handling area (processing line) and its contents in the "X" direction in exemplary 7 lanes, along which the MTUs (300) with and without trays can move to and from the tray handling area in the "Y" direction without obstructing each other. Of course, the processing line can have any other number of lanes for delivery of trays to individual parts of the processing line. The mobile shelf(s) (100), in turn, may be located on the working line (processing line) in close proximity to the place where the trays and their contents are processed, and can be moved in the "X" direction, across the entire width of the working area (in this embodiment, across all 7 lanes). Thus, on the working shelves' (100) holding places, the MTUs (300) puts the trays (001) preferably across the entire width of the working area. The movable shelves in turn move the trays to the operator and back to its arrival lane or to another required lane.

Figure 2 illustrates a known processing place for handling trays and their contents, used in a similar storage and access system configured to utilize transport mobile devices (300) moving trays (001) therein. The processing location allows a stationary operator to process a tray (001) brought to him by the transport mobile device (300). The movement of the transport mobile devices (300) along the transportation network (200) connecting the workstation to the storage system is one-way. Thus, the transportation network (200) in the area of the tray handling area is two one-way lanes facing each other. In this case, the transport mobile devices, when moving from one lane to the other, have to change their direction of movement twice. In addition, in the lane directly in the working area of the trays and their contents processing place, the MTUs (300) with trays to be processed line up in a queue, interfering with each other.

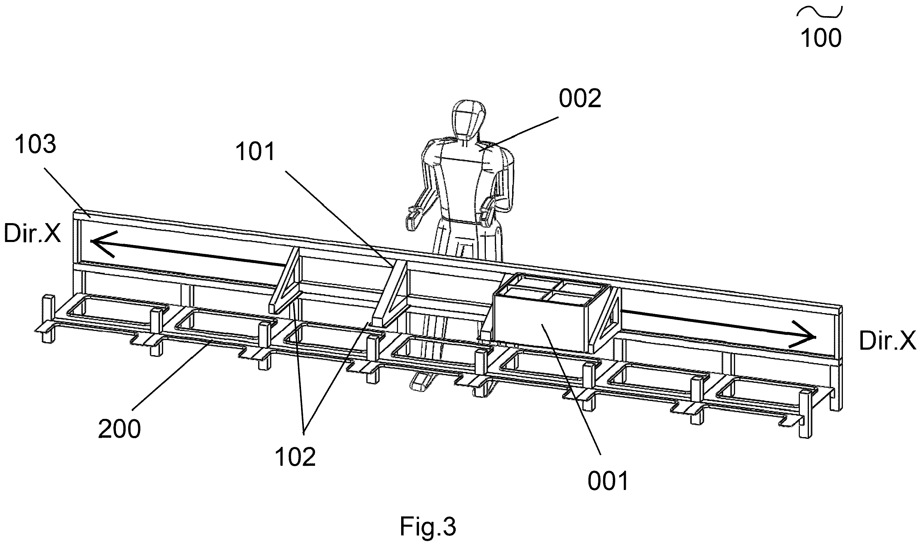

Thus Figure 3 shows in more detail the mobile shelf (100) and the working line adjacent to the handling of the trays and their contents according to the present invention. As shown in Figure 3, the mobile shelf (100) may comprise a body (101) to which cantilevered shelves (102) are cantilevered and positioned above the transportation network (200) at a desired height, and it may be moved along rail tracks (103) in an "X" direction to either side thereof. In the embodiment proposed in the figure, the mobile shelf (100) has three shelves (102) which are tray storage areas (001), one of which has a tray on it. It is also to be understood that the number and shape of the shelves (102) may differ from that shown in the figure and is not intended to limit the invention, but merely to demonstrate it. As shown in the figure, although the mobile shelf (100) may move along the entire working line in the direction "X" to either side thereof, continuously for its entire width, it may stop each time it is operated so that the axes of its shelves (102) are aligned with the axes of the intersections of the transportation network (lanes) underneath it, and as a consequence, the centre-to-centre distance between the shelves (102) shall coincide with a similar dimension between the intersections of the transportation network (200).

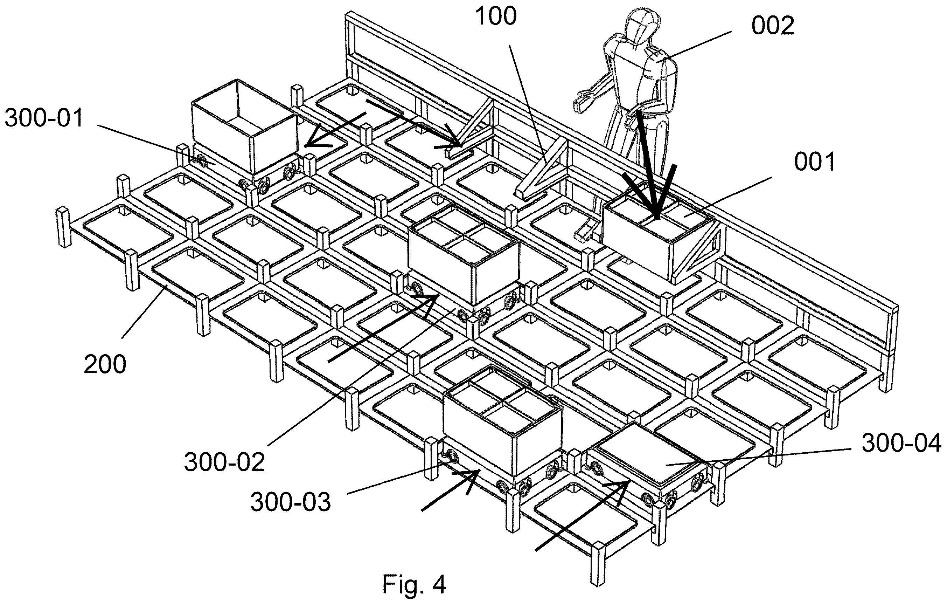

Figures 4-13 illustrate, step by step, a method of operation of a tray processing station and its contents in accordance with the present invention. Throughout the series of figures, arrows indicate the movement of certain process participants from their position in the previous figure to the depicted position.

Thus, Figure 4 shows an initial position in which a mobile shelf (100) is in its centre position and the operator (002) is processing the contents of the tray (001) standing thereon. The mobile shelf (100) has moved to this position from the leftmost position of the working line, where, beforehand, the MTU (300-01) removed the already processed tray from it and takes it away from the place of processing. Two more MTUs (300-02 and 300-03) moved to the transportation network (200) with the target trays that need to be delivered to the workstation, the fourth MTU (300-04), empty, also moved to the transportation network (200).

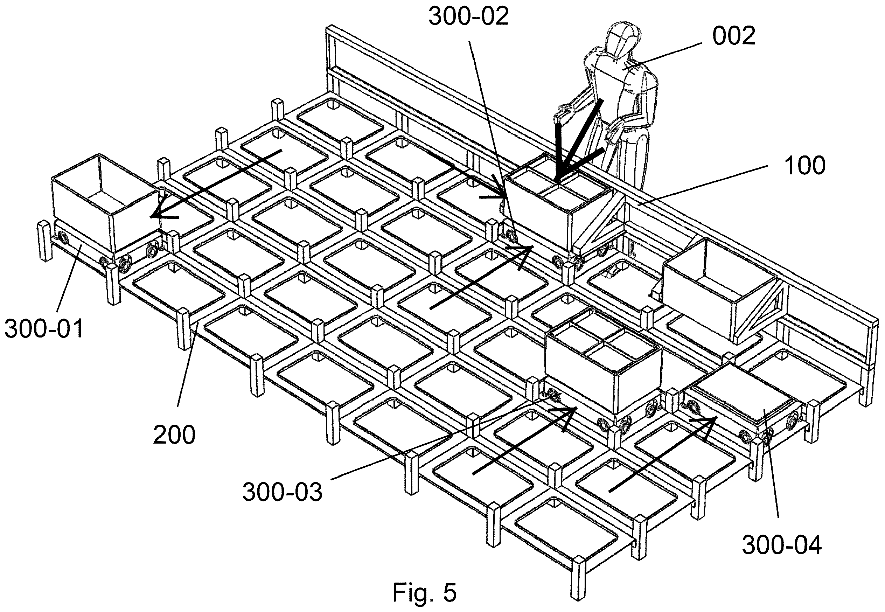

Fig.5 shows the following position of operation of the place of processing of trays and their contents in which the operator (002) has finished processing the contents of the first tray and after that the mobile shelf (100) has moved one intersection of the transport network to the right. The MTU (300-02) has driven under it, for putting the tray brought by it to another position on the shelf. Parallel to this, the MTU (300-01) with an empty tray on board may continue to move away from the processing location, and the MTUs (300-03 and 300-04) may continue to the processing location. Thus, we can see that many MTUs, without interfering with each other, and without losing additional time for unnecessary manoeuvres, work in parallel at the optimal speed for them, performing each of their tasks.

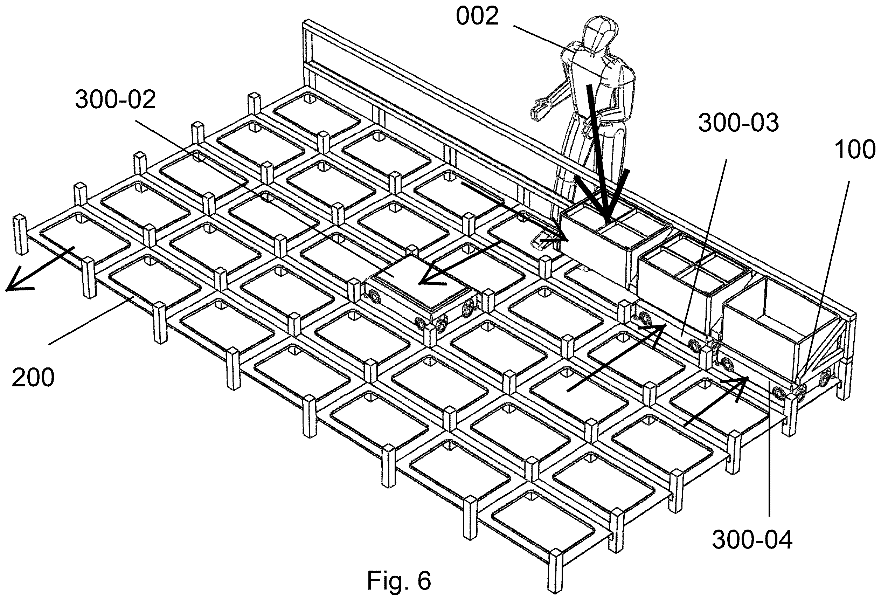

In the next figure of the series, Fig. 6, it can be seen that the operator (002) continues to process the contents of the tray brought by MTU (300-02), while the mobile shelf (100) has moved to its right position, where MTU (300-03) with the target tray and empty MTU (300-04) have moved under it. Simultaneously, the MTU (300-01) with the empty tray left the transportation network (200).

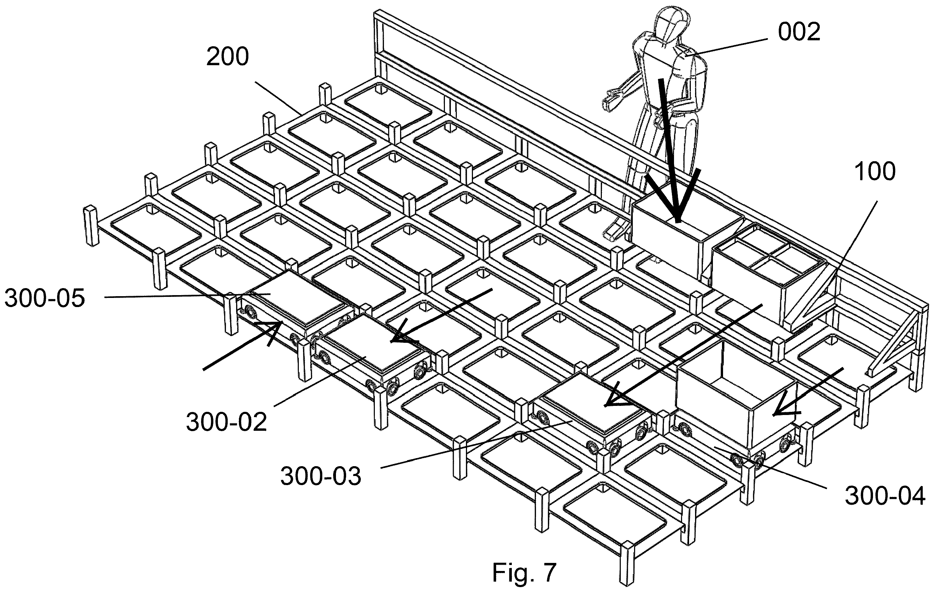

Fig.7, depicting the next step of the operation of the tray handling place and its contents, shows the position at which the operator (002) has completed the handling of the tray nearest to him standing on the mobile shelf (100). At the same time, the two MTUs (300-02 and 300-03), which have left their trays on the mobile shelf, move to exit the transportation network (200). The MTU (300-04) has taken the previously processed tray from the mobile shelf (100) and is moving with it to the exit of the transport network (200). In parallel, an empty MTU (300-05) has driven onto the transportation network.

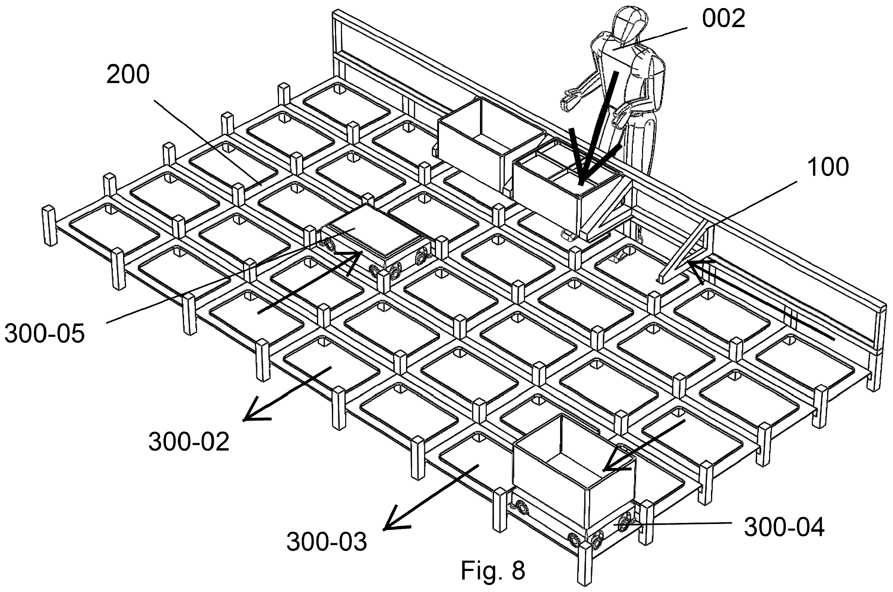

Figure 8 shows the next operating position of the tray and contents handling location, where the mobile shelf (100) has moved to its centre position, giving the operator (002) access to the tray standing on its middle storage location. The MTUs (300-02 and 300-03) have left the transportation network, the MTU (300-04) with the empty tray moves in a direction away from the workstation, the MTU (300-05) is empty, has driven onto the transportation network (200) and is moving in a direction towards the processing location.

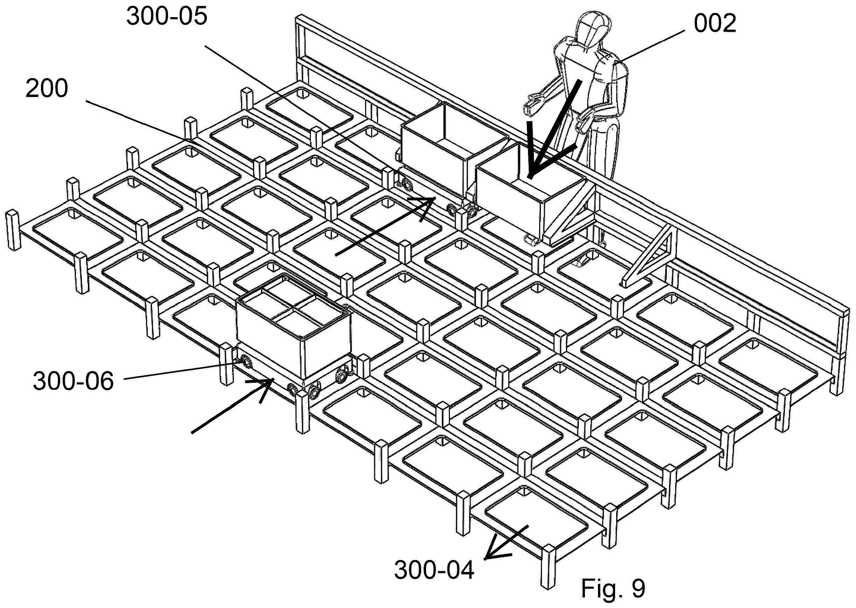

FIG. 9 shows the following work position in which the operator (002) has finished processing the second tray standing on the mobile shelf in the middle, the MTU (300-05) has driven under the second tray standing on the mobile shelf in order to drive it away. At the same time, the transportation network (200) was left by the MTU (300-04) carrying the empty tray, and the MTU (300-06) with the target tray drove under it.

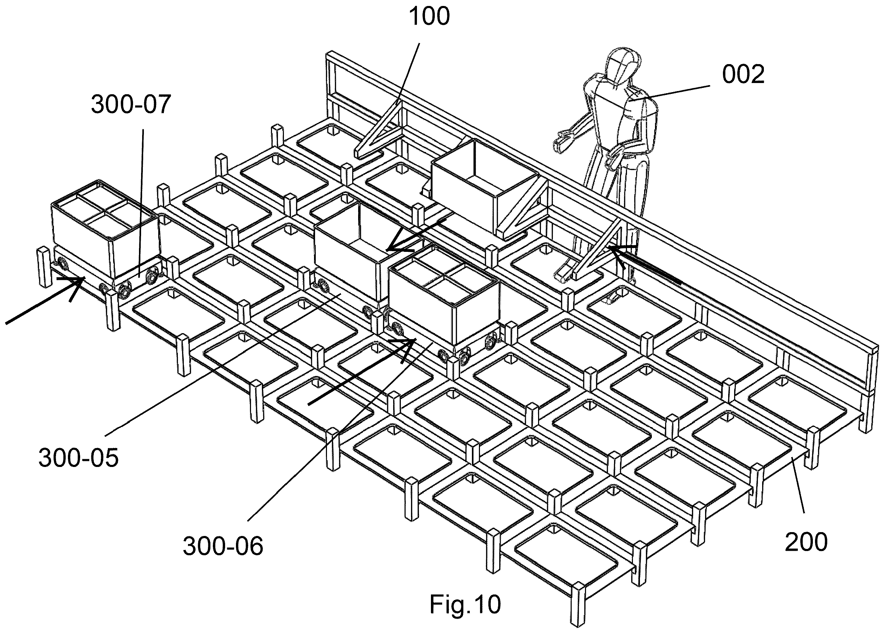

Figure 10 shows the position in which the MTU (300-05) took the empty tray from the storage place of the mobile shelf and left its working line, after which the mobile shelf (100) moved one intersection to the left, placing its empty storage place opposite the approaching MTU (300-06) with the target tray on board. At the same time, a MTU (300-07) with another target tray drove into the transportation network (200) in the leftmost lane.

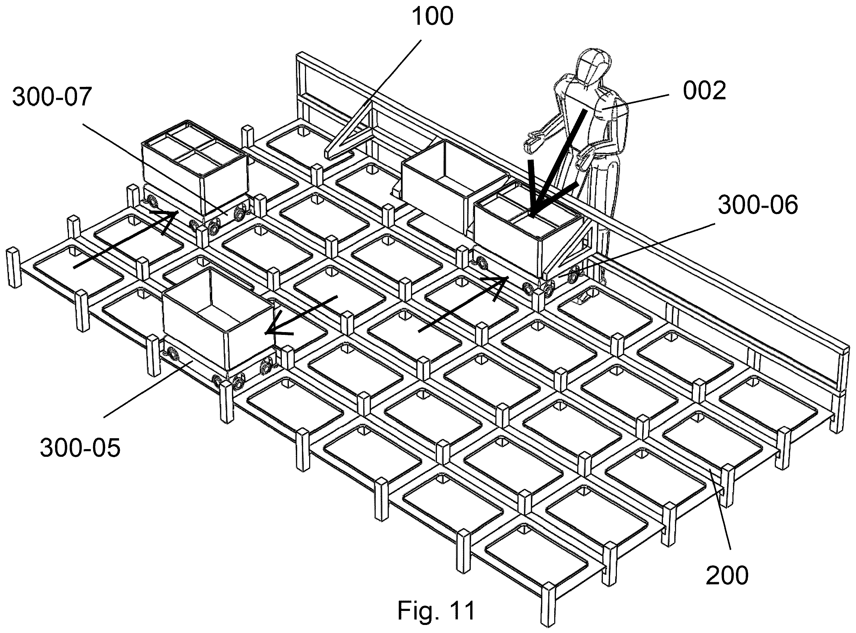

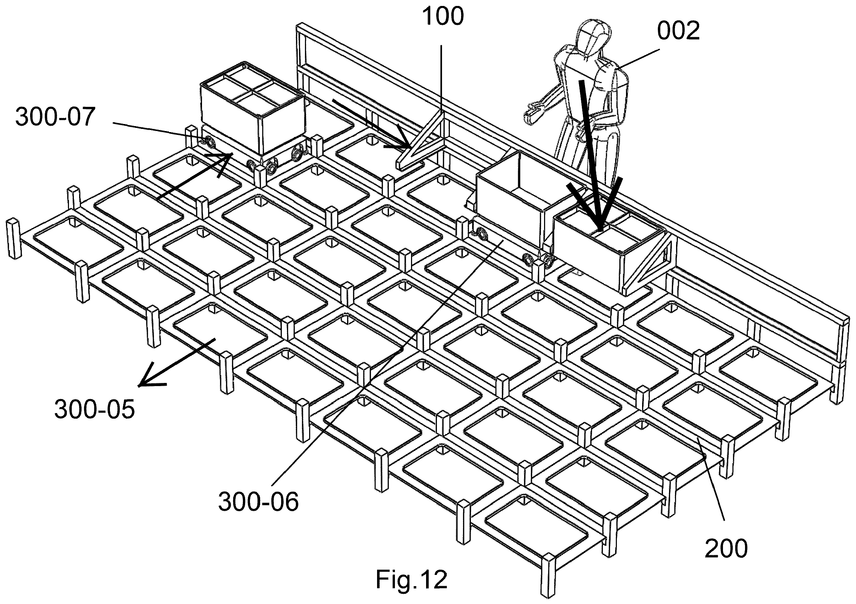

Figs. 11 and 12 show the continuation positions of the tray handling place and its contents, where the target trays are brought by different MTUs to the mobile shelf (100), and empty trays are taken away from it. The difference between the steps shown in Figures 11 and 12 and the previous steps is that the MTU (300-06) in Fig-ure 11 brought the target tray to the mobile shelf (100), but in Figure 12, when the mobile shelf (100) moved one step to the right, placing an already processed tray standing on one of the shelf storage locations above the MTU (300-06), it picked it up. This use of the MTU further optimizes the processing of the trays and their contents. Next, obviously, steps similar to those in Figures 4-12 will follow.

It is also obvious that other algorithms for using the processing place are possible, for example, when one of the storage places of the mobile shelf may have a tray - acceptor, in which the operator can collect the order from a set of trays-donors, brought and picked up by a set of MTUs to the other storage places of the mobile shelf, etc. Thus, in Fig. 4-12, shows a preferred method of application of the claimed tray processing place and its contents, as a result of performing the steps shown in the fig-ures, any target trays are fed by a plurality of MTUs and taken back, parallel to each other, without mutual interference, which increases the processing speed, as well as flexibility and scalability of the system by adding/decreasing the number of those or other elements of the tray processing place and its contents and transportation network.

The described in the example variant of the processing place for trays and their contents, as well as its quantitative composition and method of interaction with the MTU (300), trays (001), the design of the mobile shelf (100), the number of storage places thereon, the number of lanes of the transportation network (200) and the operating range of the mobile shelf are not the only possible and somehow limiting the invention

According to a preferred aspect of the invention the processing system includes a movable shelf (100) having multiple storage locations for unit trays, which allows a workstation operator to both move items between trays and increases the assortment simultaneously available to the operator. As a result, the speed of on-site processing is increased.

According to a preferred aspect of the invention the processing system includes a movable shelf (100) which can be moved along the processing site beyond the processing site in both directions. The advantages of this technical feature are a significant expansion of the assortment available for picking, being in the immediate vicinity of the operator (within a second's reach).

According to a preferred aspect of the invention the movable shelf (100) is located above a transport network which is preferably substantially wider than the shelf itself, and over which trays are movable by the MTU (300) and placed and picked up by them from the shelf across the entire width of the transport network, along all its paths. The advantage of this technical feature is the unobstructed movement of a large number of MTU (300) into the working line of the picking place, which significantly speeds up the processing.

According to a preferred aspect of the invention the movable shelf (100) is configured so as to move freely along its working line also above the empty MTUs (300), and not to prevent their movement under it. This technical feature has the advantage of speeding up the processing of objects stored in the system, as well as reducing the required number of MTUs (300) to provide a given processing speed, making the system cheaper.

According to a preferred aspect of the invention the distance between the storage locations (102) on the movable shelf (100) in the X direction (longitudinal direction of the processing line), and the distance between the paths of the transportation network in the same direction are the same. The advantage of this technical feature is the possibility of simultaneous insertion/removal of trays from all storage locations of the movable shelf (100) by several MTUs (300) at once, which multiplies the processing capacity.

According to a preferred aspect of the invention a tray (001) placed on any of the storage locations (102) of the movable shelf (100) can be transferred to any MTU (300) located on any of the tracks of the transportation network by moving the shelf laterally between the tracks. The advantage of this feature is the increase in processing speed and the greater flexibility of the system with such a processing point due to the use of the shelf, in addition to its main task of providing trays for the operator, it additionally performs the movement of the tray between the tracks of the transport network, which saves the MTUs (300) from having to wait for the tray they have brought back, or to change the direction of their movement, thus performing additional slow manoeuvres.

According to a preferred aspect of the invention a MTU (300) that has handed over its tray (001) to the movable shelf can take over either the tray it brought in earlier or any other tray from any of the storage locations (102) of the movable shelf (100) without changing its position by the shelf/storage area moving towards that MTU. The advantage of this feature is an increase in processing speed and greater flexibility of the system with such a processing place due to the use of the shelf, in addition to its main task of providing trays for the operator, it additionally performs the movement of the tray between the tracks of the transport network, which saves the MTU (300) from having to wait for the tray they brought back, or to change the direction of their movement, thereby performing additional slow manoeuvres.

## Claims

1. A processing system with
a processing line for handling trays and their contents by an operator, the processing line comprising
- a shelf (100) with at least two storage areas (102) for holding trays (001) for an operator's (002) handling,
- the shelf is movable laterally along the processing line such that each of the storage areas (102) is deliverable to an operator working position at the processing line,
- the processing line comprises connections to multiple delivery tracks (200) for mobile transport units (300) which are adapted to deliver the trays (001) to one of the storage areas (102) of the shelf (100),
**characterized in that**
the shelf (100) is adapted such that at least one of the storage areas (102) is alignable to one of the connections to a delivery track (200), to allow for a transfer of a tray (001) between the mobile transport unit (300) on a delivery track (200) and the adjacent positioned storage area (102),
the connection for the delivery tracks (200) reach under the shelf (100) such that the mobile transport units (300) can directly move below and/or between neighbouring storage areas (102), and
the shelf (100) is adapted to be positioned such that individual storage areas (102) can interact with different mobile transport units (300) from different delivery tracks (200) simultaneously for an exchange of trays (001),

2. The processing system according to claim 1
**characterized in that**
the storage areas (102) move together and/or the shelf (100) is one piece.

3. The processing system according to claim 1 or 2
**characterized in that**
The connections for the delivery tracks (200) are interconnected to allow the mobile transport units (300) to move between individual delivery tracks (200)/different positions below the movable shelf (100) in order to change their relative position to the processing line such that a first tray (001) can be delivered to a storage area (102) and another tray (001) from a different storage area (102) can be picked up by the same mobile transport unit (300) subsequently without leaving the proximity of the processing line.

4. The processing system according to claims 1 to 3
**characterized in that**
the movable shelf (100) is adapted to move the storage areas (102) to the operator (002) by lateral movement once at a time.

5. The processing system according to claim any of claims 1 to 4
**characterized in that**
the shelf (100) is movable such that the storage areas (102) of the shelf (100) are accessible via different delivery tracks (200).

6. The processing system according to claim any of claims 1 to 5
**characterized in that**
the shelf is arranged above the delivery tracks (200) such that an empty MTU can rest below the shelf (100) without collision while the shelf (100) is repositioning.

7. The processing system according to claim any of claims 1 to 6
**characterized in that**
the different storage areas (102) are independently accessible to individual MTUs (300).

8. The processing system according to claim any of claims 1 to 7
**characterized in that**
The number of tracks is larger than the number of storage areas (102) of the shelf (100).

9. The processing system according to claim any of claims 1 to 8
**characterized in that**
the width and/or distance between the storage areas (102) is adapted to the distance between neighbouring delivery tracks (200) to allow for parallel access to multiple storage areas via individual delivery tracks (200) at the same time.
